# EUROPEAN PATENT APPLICATION

(11) **EP 3 883 089 A1**
(43) Date of publication of application: **22.09.2021**
(21) Application number: 20164267.5
(22) Date of filing: 19.03.2020
(51) Int. Cl.: H02K 1/14, H02K 3/487, H02K 7/18

(54) **END OF SEGMENT MECHANICAL COIL PROTECTION**

(71) Applicant: Siemens Gamesa Renewable Energy A/S, 7330 Brande (DK)
(72) Inventor: Azar, Ziad, Sheffield, South Yorkshire S10 4ED (GB); Duke, Alexander, Sheffield, South Yorkshire S10 5SN (GB)
(74) Representative: Aspacher, Karl-Georg

(57) **Abstract**

The present invention relates to a stator segment (100) of a stator of a generator for a wind turbine. The stator segment (100) comprises a base body (101) extending between a first axial end (105) and a second axial end in axial direction (106) and in circumferential direction (107) of the generator, wherein the base body (101) comprises a circumferential end face (102) extending between the first axial end (105) and the second axial end. Furthermore, an end tooth structure (103) extends in radial direction (108) from the base body (101) and extends between the first axial end (105) and the second axial end, wherein the end tooth structure (103) is spaced apart from the end face (102) along the circumferential direction (107) for forming an accommodation space (104) for accommodating an end coil (109) of the stator. The stator segment (100) further comprises a spacer structure (110)which is configured for being coupled to a circumferentially arranged adjacent stator segment (100) for spacing the accommodation space (104) from an adjacent accommodation space (124) of the adjacent stator segment (100).

## Description

### Field of invention

The present invention relates to a stator segment of the stator of a generator for wind turbine. Furthermore, the present invention relates to a method of manufacturing a stator segment of the stator of the generator for wind turbine.

### Art Background

An electrical generator, such as an electric generator installed in a wind turbine, typically comprises a rotor which rotates relative to a stator. In generators for wind turbine, double layer coils may be used. Common coils are defined as double layer winding fractional slot concentrated windings (FSCW), wherein the end coil length is dictated by pliability of the insulation as well as the manufacturability of inserting the coil.

Large diameter generators are often segmented to allow for easier manufacture, transport and construction. In single layer winding generators the circumferential ends of each stator segment can be designed with a half end tooth. The half end tooth may comprise a half circumferential thickness of a central tooth of the stator segment. This ensures that the conductors and insulation system at the circumferential ends are protected both during transportation as well as during operation. This is particularly pertinent when the full generator undergoes thermal cycles which may then cause adjacent circumferential segments to come into contact and would otherwise cause damage to the coil assembly. However, in double layer winding, for example double layer concentrated winding generators, it is difficult to cut each segment in the mid tooth, instead the coil side is exposed at the end of the segment. Additionally, the current and flux passing through the end coil halves, as well as the thermal loading and vibration, could lead to a force away from the tooth, therefore increasing the chance of two end coils from adjacent stator segments coming into contact.

Therefore, there is still a need to provide a protection for end coils of a stator segment in a distributed winding generator.

### Summary of the invention

This need may be met by a stator segment of a stator of a generator for wind turbine, a stator of the generator for wind turbine and a method of manufacturing a stator segment according the subject matter according to the independent claims. Advantageous embodiments of the present invention are described by the dependent claims.

According to a first aspect of the invention, a stator segment of a stator of a generator for a wind turbine is provided. The stator segment comprises a base body extending between a first axial end and a second axial end in axial direction and in circumferential direction of the generator, wherein the base body comprises a circumferential end face extending between the first axial end and the second axial end.

The stator segment further comprises an end tooth structure extending in radial direction from the base body and extending between the first axial end and the second axial end, wherein the end tooth structure is spaced apart from the end face along the circumferential direction for forming an accommodation space for accommodating an end coil of the stator.

The stator segment further comprises a spacer structure which is configured for being coupled to a circumferentially arranged adjacent stator segment for spacing the accommodation space from an adjacent accommodation space of the adjacent stator segment.

According to further aspect of the present invention, a stator of a generator for a wind turbine is presented. The stator comprises an above described stator segment and an end coil being arranged within the accommodation space of the stator segment. The end coil comprises a smaller circumferential thickness than the circumferential extension of the accommodation space.

According to further exemplary embodiment, a method of manufacturing a stator segment of a stator of a generator for a wind turbine is presented. According to the method, a base body is provided extending between a first axial end and a second axial end in axial direction and in circumferential direction of the generator, wherein the base body comprises a circumferential end face extending between the first axial end and the second axial end.

Furthermore, according to the method, an end tooth structure is formed extending in radial direction from the base body and extending between the first axial end and the second axial end, wherein the end tooth structure is spaced apart from the end face along the circumferential direction for forming an accommodation space for accommodating an end coil of the stator. Furthermore, according to the method a spacer structure is formed, which is configured for being coupled to a circumferentially arranged adjacent stator segment for spacing the accommodation space from an adjacent accommodation space of the adjacent stator segment.

The generator of the wind turbine transfers the kinematic energy induced by the rotor blades in electrical energy. The generator comprises a stator and a rotor rotating around the stator. The hub of the wind turbine, to which the blades are coupled, is coupled to the rotor, such that upon rotation of the wind turbine blades, the rotor rotates around the stator for generating energy.

The axial direction is defined as a direction parallel to a rotary axis of the rotor of the generator. The radial direction is perpendicular to the axial direction and runs through the rotary axis of the generator. The circumferential direction is perpendicular to the axial direction and the radial direction. The circumferential direction defines the direction around the rotary axis and the axial direction, respectively.

Specifically, the stator comprises a plurality of stator segments which are arranged one after another around a circumferential direction. Respective coils are arranged to the surfaces of the stator segments. The coils are wound in form of a loop. The coils comprise an electrically conductive core comprising for example copper. Furthermore, the electrically conductive core is surrounded by an electrically isolating insulation. The coils arranged at the circumferential ends of the respective stator segment are denoted "end coils". Accordingly, adjacent stator segment comprises respective adjacent end coils.

In order to provide a fixation for the coils and in order to provide a magnetic core of the respective coils, the stator segment comprises respective tooth structures which comprise protrusions extending between a first axial end and the second axial end of the stator segment. The stator segment comprises a base body from which radial inner or radial outer surface the respective tooth structures protrude. A respective coil is wound around one tooth structure. The circumferentially outermost tooth structure is defined as the "end tooth structure". Accordingly, the end coil is wound around the end tooth structure. Between two adjacent tooth structures, a respective groove for a respective coil is formed. At the circumferential end of the stator segment, the end coil is wound around the end tooth structure.

The tooth structures may be formed of a plurality of laminated (metal) sheets which are stacked together along the axial direction. Each of the laminated sheets may be fixed to the base body. The tooth structure may be segmented along the axial direction such that the structure may comprise a plurality of the elements arranged one after another along the axial direction and form together a common tooth structure around which the respective coil may be wound. The base body may be a monolithically formed body or may consist as well of a stacked laminated sheet structure. The base body may be formed of metallic material and may form a back iron body of the stator segment.

The base body comprises a circumferential end face which may abut against a respective adjacent end face of an adjacent base body of an adjacent stator segment. The protrusion of the end tooth structure is spaced apart from the end face along the circumferential direction, such that a supporting surface onto the base body between the end face and the end tooth structure is formed. Hence, the supporting surface and the end tooth structure provide an accommodation space (i.e. an end slot) for accommodating the respective end coil.

In order to provide a sufficient accommodation space and a sufficient distance, respectively, a spacer structure is provided, which is configured for being coupled to (i.e. for being in contact with) a circumferentially arranged adjacent stator segment and in particular the respective adjacent spacer structure. As described in further detail below, the spacer structure comprises for example a cover element or a distant plate which keeps a predefined distance between the end tooth structure of stator segment with respect to an adjacent end tooth structure of an adjacent stator segment. Specifically, the spacer structure keeps a circumferential thickness of the accommodation space constant, even if the stator segment is coupled to an adjacent stator segment. The spacer structure is specifically configured such that the adjacent stator segment may be distanced in such a manner, that the circumferential extension of the accommodation space is larger than the circumferential thickness (extension) of the end coil. Hence, it is ensured that the force transmission between two adjacent stator segments is provided at least partially through the spacer structures instead of the adjacent end coils, such that even if the two adjacent stator segments are fixed together, the respective end coils are not pressed together. Hence, by adding additional spacer structures to the stator segments in the area around the final end slot, mechanical protection of the end coil is achieved.

According to further exemplary embodiment, the end tooth structure comprises a radial outer end, wherein the spacer structure comprises a cover element which is coupled to the radial outer end of the end tooth structure. The cover element extends from the radial outer end of the end tooth structure along the circumferential direction to cover the accommodation space (and the end coil arranged within the accommodation space, respectively). The cover element is configured for being coupled to a circumferentially arranged adjacent cover element.

The cover element may be plate-shaped. The cover element may be coupled to a radial top surface of the radial outer end or to a side surface of the radial outer end of the end tooth wherein the side surface directs to the adjacent stator segment. Hence, the cover element and the end tooth structure form an elongated end tooth tip to ensure that if adjacent stator segments come into contact with the stator segment, the cover element and not the end coil (e.g. the insulation system around the coil core) contact each other in a force transmitting manner.

According to further exemplary embodiment, the circumferential free end of the cover element and the circumferential end face are arranged in a common plane having a normal in circumferential direction. For example, the distance between the circumferential end face to the end tooth structure is equal to the length of the circumferential extension of the cover element between the end tooth structure and the end face.

According to further exemplary embodiment, the cover element and the end tooth structure are monolithically formed. Specifically, if the end tooth structure is formed of a plurality of laminated sheets, each or a plurality of adjacent laminated sheets comprise a section of the end tooth structure and the cover element.

According to further exemplary embodiment, the cover element and the end tooth structure are detachably coupled. Hence, the cover element may be detached to provide an opening through which the end coil may be inserted inside the accommodation space. After the end coil is arranged within the accommodation space, the cover element may be fixed to the end tooth structure for closing the opening and for covering the end coil.

According to further exemplary embodiment, the end tooth structure comprises a groove extending in axial direction, wherein the cover element is detachably insertable into the groove. For example, the cover element comprises a wedge shaped edge which is adapted for being inserted inside the groove of the end tooth structure. Hence, the cover element may be slidably mounted to the end tooth structure. According to a further exemplary embodiment, the wedge shaped edge and the groove are formed in such a way that a dovetail connection is provided.

According to further exemplary embodiment, the cover element extends completely between the first axial end and the second axial end. Hence, along the radial direction, the accommodation space is completely covered by the cover element. According to further exemplary embodiment, the cover element extends only partially between the first axial end and the second axial end in such a manner that only a section (e.g. a middle section) of the accommodation space is covered by the cover element. Specifically, the section of the accommodation space covered by the cover element may have an axial length which is 1/3, 1/4, 1/5 or smaller than 1/5 of the total axial length between the first axial end and the second axial end. In fact, by only using the cover element in the axial middle of the segment, the end coil made of pre-wound coils is easier.

According to further exemplary embodiment, the spacer structure comprises alternatively to the cover element or additionally the cover element a distance plate coupled to the end face and extending from the base body along the radial direction to at least partially cover the accommodation space. The distance plate is coupled to the end face of the base body such that upon arranging an adjacent stator segment to the stator segment, the respective base body and adjacent base body abuts to the distance plate so that the base body and adjacent base body are distanced by the distance plate. Furthermore, the distance plate extends along the radial direction from the base body, such that the distance plate covers partially the circumferential outer side of the accommodation space. Hence, the distance plate further forms a mechanical barrier for the end coil so that a slipping and leaving of the end coil through a circumferential side of the accommodation space is prevented. The distance plate may form a protrusion from the back iron (base body) of the circumferential end face of the stator segment. Hence, the distance plate provides a mechanical barrier between adjacent stator segments. Hence, the distance plate prevents the end coil moving towards the adjacent segment due to the internal forces of the end coil.

According to further exemplary embodiment, the distance plate extends completely between the first axial end and the second axial end.

Alternatively, according to further exemplary embodiment, wherein the distance plate extends only partially between the first axial end and the second axial end in such a manner that only a section (e.g. a middle section) of the accommodation space is covered by the distance plate. Specifically, the circumferential outer side of the accommodation space covered by the distance plate may have an axial length which is 1/3, 1/4, 1/5 or smaller than 1/5 of the total axial length between the first axial end and the second axial end. In fact, by only using the distance plate in the axial middle of the segment, the end coil made of pre-wound coils is easier.

According to further exemplary embodiment, the distance plate is further coupled to the cover element. Hence, the distance plate completely covers a circumferential outer side of the accommodation space. Furthermore, due to the coupling of the distance plate with the cover element, a stronger and more robust structure of the cover element and the distance plate is provided hence, the distance plate provides that the end coil half is held in place mechanically as well as providing a physical barrier between neighboring stator segments.

According to further exemplary embodiment, the cover element and the base body comprise respective grooves extending in axial direction, wherein the distance plate forms a slot wedge being detachably insertable in the respective grooves. The distance plate may comprise for example the first wedged edge being insertable in a respective groove of the base body and a second wedged edge being insertable in a respective groove of the cover element. Hence, the distance plate may be slidably mounted to the base body and the cover element. According to a further exemplary embodiment, the wedge shaped edge and the grooves are formed in such a way that a dovetail connection is provided.

According to further exemplary embodiment of the stator, the stator further comprises an adjacent stator segment which comprises the features as described above for the stator segment. Furthermore, the adjacent stator segment comprises an adjacent end coil being arranged within the adjacent accommodation space of the adjacent stator segment. The stator segment and the adjacent stator segment are arranged one after another along the circumferential direction in such a manner that the spacer structure of the stator segment abuts with the adjacent spacer structure of the adjacent stator segment.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawing

- Figure 1: to Figure 3 show schematically views of a stator having stator segments with a respective cover element according to an exemplary embodiment of the present invention.
- Figure 4: shows a schematically view of a stator having a stator segment with a respective distance plate according to an exemplary embodiment of the present invention.
- Figure 5: and Figure 6 show schematically views of a stator having stator segments with a respective distance plate and a cover element according to an exemplary embodiment of the present invention.
- Figure 7: and Figure 8 show schematically views of a stator having stator segments with a respective distance plate and cover element, wherein the distance plate is coupled to the cover element and the base body according to an exemplary embodiment of the present invention.
- Figure 9: shows an enlarged view of a coupling between the distance plate and the cover element in the embodiment shown in Figures 7 and 8.

Detailed Description

The illustrations in the drawings are schematic. It is noted that in different figures, similar or identical elements are provided with the same reference signs.

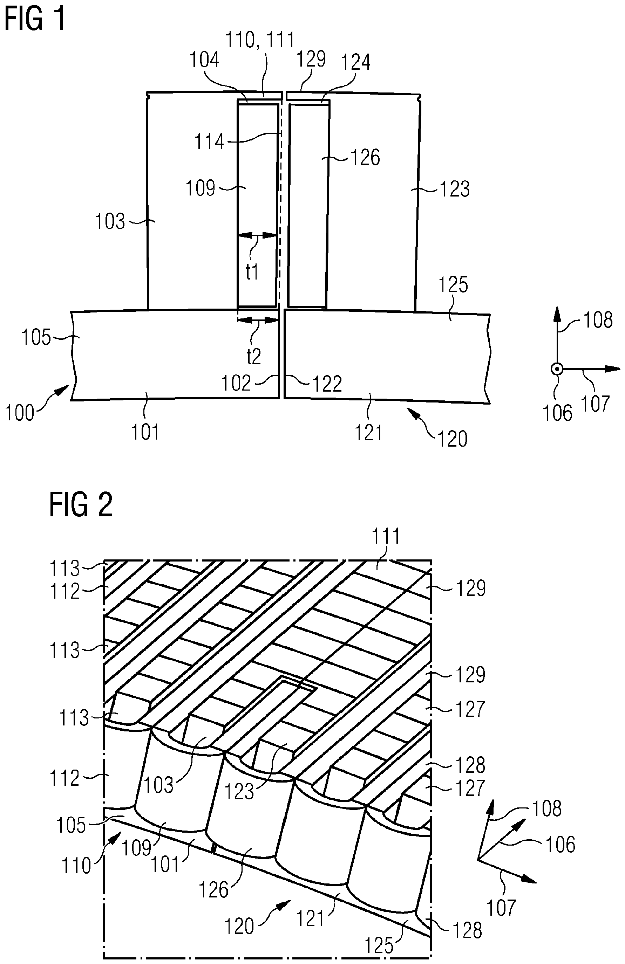

**Figure 1** to **Figure 3** show schematically views of a stator having stator segments 100, 120 with a respective cover element 111, 129 according to an exemplary embodiment of the present invention.

The stator segment 100 of a stator of a generator for a wind turbine comprises a base body 101 extending between a first axial end 105 and a second axial end in axial direction 106 and in circumferential direction 107 of the generator, wherein the base body 101 comprises a circumferential end face 102 extending between the first axial end 105 and the second axial end. Furthermore, an end tooth structure 103 extends in radial direction 108 from the base body 101 and extends between the first axial end 105 and the second axial end, wherein the end tooth structure 103 is spaced apart from the end face 102 along the circumferential direction 107 for forming an accommodation space 104 for accommodating an end coil 109 of the stator. The stator segment 100 further comprises a spacer structure 110 which is configured for being coupled to a circumferentially arranged adjacent stator segment 100 for spacing the accommodation space 104 from an adjacent accommodation space 124 of the adjacent stator segment 120.

The axial direction 106 is defined as a direction parallel to a rotary axis of the rotor of the generator. The radial direction 108 is perpendicular to the axial direction 106 and runs through the rotary axis of the generator. The circumferential direction 107 is perpendicular to the axial direction 106 and the radial direction 108. The circumferential direction 107 defines the direction around the rotary axis and the axial direction 106, respectively.

As can be taken from Figure 2, the stator comprises a plurality of stator segments 110, 120 which are arranged one after another around the circumferential direction 107. Respective coils 109, 112, 126, 129 are arranged to the surfaces of the stator segments 110, 120. The coils 109, 112, 126, 129 are wound in form of a loop. The coils 109, 126 arranged at the circumferential ends of the respective stator segment 110, 120 are denoted "end coils" 109, 126.

In order to provide a fixation for the coils 109, 112, 126, 128 and in order to provide a magnetic core of the respective coils 109, 112, 126, 129, the stator segment 110, 120 comprises respective tooth structures 103, 113, 123, 127 which comprise protrusions extending between the first axial end 105, 125 and the second axial end of the stator segments 110, 120. The stator segments 110, 120 comprise respective base bodies 101, 121 from which radial outer surface the respective tooth structures 103, 113, 123, 127 protrude. A respective coil 109, 112, 126, 129 is wound around one tooth structure 103, 113, 123, 127. The circumferentially outermost tooth structure 103, 123 is defined as the "end tooth structure" 103, 123. Accordingly, the end coil 109, 126 is wound around the end tooth structure 103, 123. Between two adjacent tooth structures 113, 127, a respective groove for respective coils 112, 128 is formed. At the circumferential end of the stator segments 110, 120, the end coils 109, 126 are wound around the end tooth structures 103, 123.

The base body 101 comprises a circumferential end face 105 which may abut against a respective adjacent end face 122 of an adjacent base body 121 of an adjacent stator segment 120. The protrusion of the end tooth structure 103 is spaced apart from the end face 102 along the circumferential direction 107, such that a supporting surface onto the base body 101 between the end face 102 and the end tooth structure 103 is formed. Hence, the supporting surface and the end tooth structure 103 provide an accommodation space 104 (i.e. an end slot) for accommodating the respective end coil 109. Accordingly, the adjacent stator second 120 may similarly formed for providing an adjacent accommodation space 124 for the adjacent end coil 126.

In order to provide a sufficient accommodation space 104 and a sufficient distance t2, respectively, a spacer structure 110 is provided, which is configured for being coupled to (i.e. for being in contact with) a circumferentially arranged adjacent stator segment 120 and in particular the respective adjacent spacer structure (e.g. formed by an adjacent cover element 129).

The spacer structure 110 comprises as shown in the exemplary embodiment of Figures 1 to 3 a cover element 111 which keeps a predefined distance t2 between the end tooth structure 103 of stator segment 110 with respect to an adjacent end tooth structure 123 of an adjacent stator segment 120. Specifically, the spacer structure 110 keeps a circumferential thickness t2 of the accommodation space 104 constant, even if the stator segment 110 is coupled to an adjacent stator segment 120. The spacer structure 110 is specifically configured such that the adjacent stator segment 110 may be distanced in such a manner, that the circumferential extension t2 of the accommodation space 104 is larger than the circumferential thickness (extension) t1 of the end coil 109.

The end tooth structure 103 comprises a radial outer end to which the cover element 111 is coupled. The cover element 111 extends from the radial outer end of the end tooth structure 103 along the circumferential direction 107 to cover the accommodation space 104 (and the end coil 109 arranged within the accommodation space, respectively). The cover element 111 is configured for being coupled to a circumferentially arranged adjacent cover element 129.

The cover element 111 may be plate-shaped. The cover element 111 is coupled to a side surface the radial outer end of the end tooth 103, wherein the side surface directs to the adjacent stator segment 120. Hence, the cover element 111 and the end tooth structure 103 form an elongated end tooth tip to ensure that if the adjacent stator segment 120 comes in contact with the stator segment 100, the cover element 111 and not the end coil 109 (e.g. the insulation system around the coil core) contact each other in a force transmitting manner.

As can be taken from Figure 1, the circumferential free end of the cover element 111 and the circumferential end face 102 are arranged in a common plane 114 having a normal in circumferential direction 107. For example, the distance t2 between the circumferential end face 102 to the end tooth structure 103 is equal to the length of the circumferential extension of the cover element 111 between the end tooth structure 103 and the end face 102.

As shown in Figure 1, the cover element 111 and the end tooth structure 103 may be are monolithically formed.

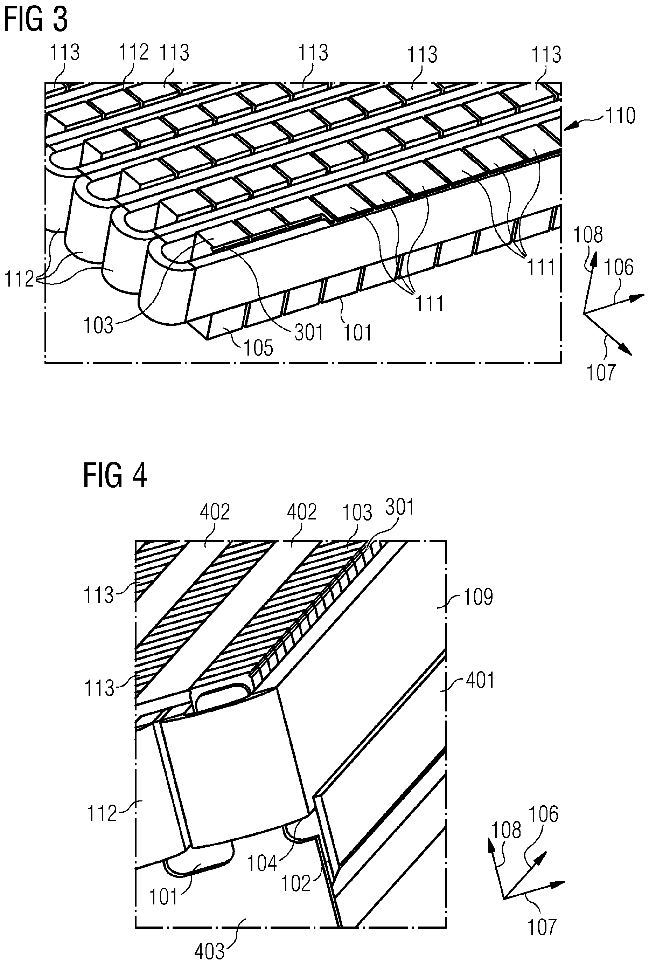

As can be taken from Figures 2 and 3, the cover element 111 extends only partially between the first axial end 105 and the second axial end in such a manner that only a section (e.g. a middle section) of the accommodation space 104 is covered by the cover element 111.

Furthermore, along the axial direction 106, the end tooth structure 103 may be segmented in a plurality of and the elements. Accordingly, the cover element 111 may also be segmented along the axial direction 106.

**Figure 4** shows a schematically view of a stator having a stator segment 100 with a respective distance plate 401 according to an exemplary embodiment of the present invention. The distance plate 401 is coupled to the circumferential end face 102 of the base body 101 and extends from the base body 101 along the radial direction 108 to at least partially cover the accommodation space 104. The distance plate 401 is coupled to the end face 102 of the base body 101 such that upon arranging an adjacent stator segment 120 to the stator segment 100, the respective base body 101 and adjacent base body 121 abuts to the distance plate 401 so that the base body 101 and adjacent base body 121 are distanced by the distance plate 401. Furthermore, the distance plate 401 further forms a mechanical barrier for the end coil 109 so that a slipping and leaving of the end coil 109 through a circumferential side of the accommodation space 104 is prevented. The distance plate 401 forms in other words a protrusion from the back iron (base body 101) of the circumferential end face 102 of the stator segment 100. Hence, the distance plate provides a mechanical barrier between adjacent stator segments 100, 120.

Furthermore, as can be taken from Figure 4, the end tooth structure 103 is formed of a plurality of laminated sheets, each or a plurality of adjacent laminated sheets comprise a section of the end tooth structure 103. The laminated sheets form a stack and are pressed together for example by an and plate 403.

Additionally, the further coils 112 are arranged in further accommodation spaces between the tooth structures 113. The further accommodation spaces may also be covered by respective further cover elements 402.

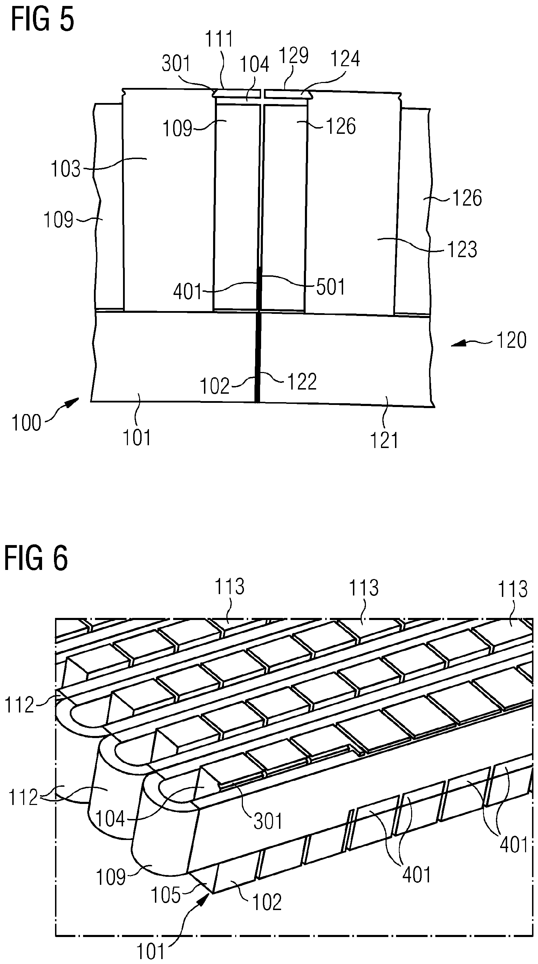

**Figure 5** and **Figure 6** show schematically views of a stator having stator segments 100, 120 with respective distance plates 401, 501 and respective cover elements 111, 129 according to an exemplary embodiment of the present invention.

As can be taken from Figure 6, the distance plate 401 extends only partially between the first axial end 105 and the second axial end in such a manner that only a section (e.g. a middle section) of the accommodation space 104 is covered by the distance plate 401.

The cover element 111 and the end tooth structure 103 are detachably coupled. Hence, the cover element 103 may be detached to provide an opening through which the end coil 109 may be inserted inside the accommodation space 104. After the end coil 109 is arranged within the accommodation space 104, the cover element 111 may be fixed to the end tooth structure 103 for closing the opening and for covering the end coil 109.

The end tooth structure 103 comprises a groove 301 extending in axial direction 106, wherein the cover element 111 is detachably insertable into the groove 301. For example, the cover element 111 comprises a wedge shaped edge which is adapted for being inserted inside the groove 301 of the end tooth structure 103. Hence, the cover element 111 may be slidably mounted to the end tooth structure 103.

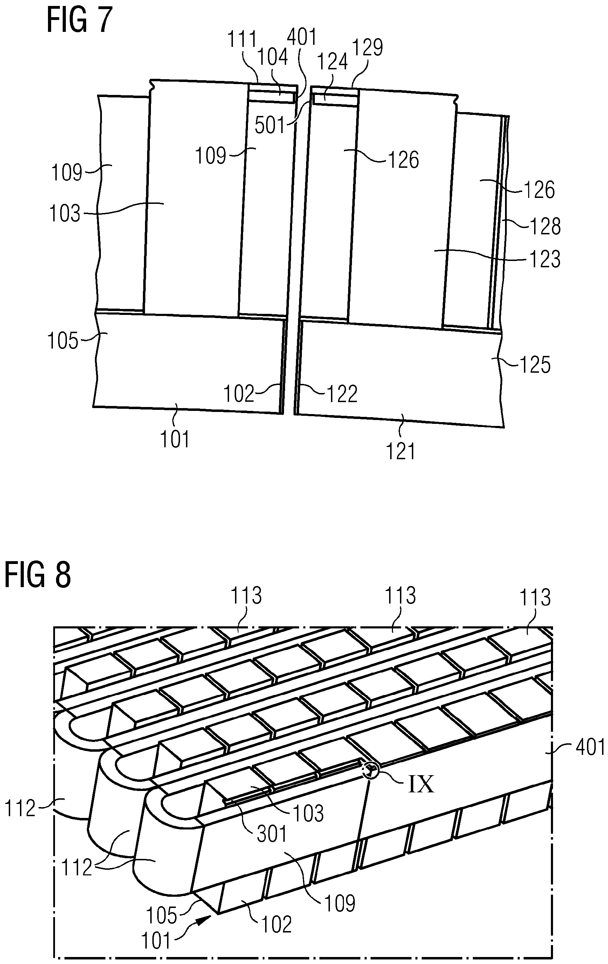

**Figure 7** and **Figure 8** show schematically views of a stator having stator segments 100, 120 with a respective distance plate 401, 501 and a respective cover element 111, 129, wherein the distance plates 401, 501 are coupled to a respective cover element 111, 129 and the respective base body 101, 121 according to an exemplary embodiment of the present invention.

Hence, e.g. the distance plate 401 completely covers a circumferential outer side of the accommodation space 104. Furthermore, due to the coupling of the distance plate 401 with the cover element 111, a stronger and more robust structure of the cover element 111 and the distance plate 401 is provided. Hence, the distance plate 401 provides that the end coil half 109 is held in place mechanically as well as providing a physical barrier between neighboring stator segments 120 and its respective adjacent end coil 126.

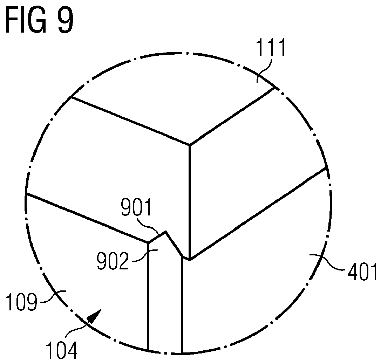

The cover element 111 and the base body 101 comprise respective grooves 901 (see in detail in Figure 9) extending in axial direction 106, wherein the distance plate 401 forms a slot wedge being detachably insertable in the respective grooves 901. The distance plate 401 may comprise for example the first wedged edge being insertable in a respective groove of the base body 101 and a second wedged edge being insertable in a respective groove 901 of the cover element. Hence, the distance plate 401 may be slidably mounted to the base body 101 and the cover element 111.

**Figure 9** shows an enlarged view of a coupling between the distance plate 401 and the cover element 111 in the embodiment shown in Figures 7 and 8. The cover element 111 comprises the groove 901 which extends along the axial direction 106. The groove 901 is formed at a surface of the cover element 111 which directs to the base body 101. The distance plate 401 comprise a respective which 902 which extends also as long the axial direction 106 and which is complementary to the respective grooves 901. Hence, the accommodation space 104 is fully surrounded by structural parts, such as the cover element 111, the distance plate 401, the base body 101 and the end tooth structure 103. Hence, the end coil 109 is safely accommodated within the accommodation space 104.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Stator segment (100) of a stator of a generator for a wind turbine, the stator segment (100) comprising
a base body (101) extending between a first axial end (105) and a second axial end in axial direction (106) and in circumferential direction (107) of the generator,
wherein the base body (101) comprises a circumferential end face (102) extending between the first axial end (105) and the second axial end,
an end tooth structure (103) extending in radial direction (108) from the base body (101) and extending between the first axial end (105) and the second axial end,
wherein the end tooth structure (103) is spaced apart from the end face (102) along the circumferential direction (107) for forming an accommodation space (104) for accommodating an end coil (109) of the stator, and
a spacer structure (110) which is configured for being coupled to a circumferentially arranged adjacent stator segment (100) for spacing the accommodation space (104) from an adjacent accommodation space (124) of the adjacent stator segment (100).

2. Stator segment (100) according to claim 1,
wherein the end tooth structure (103) comprises a radial outer end,
wherein the spacer structure (110) comprises a cover element (111) which is coupled to the radial outer end of the end tooth structure (103),
wherein the cover element (111) extends from the radial outer end of the end tooth structure (103) along the circumferential direction (107) to cover the accommodation space (104), wherein the cover element (111) is configured for being coupled to a circumferentially arranged adjacent cover element (129).

3. Stator segment (100) according to claim 2,
wherein the circumferential free end of the cover element (111) and the circumferential face are arranged in a common plane (114) having a normal in circumferential direction (107) .

4. Stator segment (100) according to claim 2 or 3,
wherein the cover element (111) and the end tooth structure (103) are monolithically formed.

5. Stator segment (100) according to claim 2 or 3,
wherein the cover element (111) and the end tooth structure (103) are detachably coupled.

6. Stator segment (100) according to claim 5,
wherein the end tooth structure (103) comprises a groove (301) extending in axial direction (106),
wherein the cover element (111) is detachably insertable into the groove (301).

7. Stator segment (100) according to one of the claims 2 to 6,
wherein the cover element (111) extends completely between the first axial end (105) and the second axial end, or wherein the cover element (111) extends only partially between the first axial end (105) and the second axial end in such a manner that only a section of the accommodation space (104) is covered by the cover element (111).

8. Stator segment (100) according to one of the claims 1 to 7,
wherein the spacer structure (110) comprises a distance plate (401) coupled to the end face (102) and extending from the base body (101) along the radial direction (108) to at least partially cover the accommodation space (104).

9. Stator segment (100) according to claim 8,
wherein the distance plate (401) extends completely between the first axial end (105) and the second axial end, or wherein the distance plate (401) extends only partially between the first axial end (105) and the second axial end in such a manner that only a section of the accommodation space (104) is covered by the distance plate (401).

10. Stator segment (100) according to claim 2 and 8, wherein the distance plate (401) is further coupled to the cover element (111).

11. Stator segment (100) according to claim 10,
wherein the cover element (111) and the base body (101) comprise respective grooves (901) extending in axial direction (106),
wherein the distance plate (401) forms a slot wedge being detachably insertable in the respective grooves (901).

12. Stator of a generator for a wind turbine, the stator comprising
a stator segment (100) according to one of the claims 1 to 11,
an end coil (109) being arranged within the accommodation space (104) of the stator segment (100),
wherein the end coil (109) comprises a smaller circumferential thickness than the circumferential extension of the accommodation space (104).

13. Stator according to claim 12, further comprising
an adjacent stator segment (120) according to one of the claims 1 to 11,
an adjacent end coil (126) being arranged within the adjacent accommodation space (124) of the adjacent stator segment (120),
wherein the stator segment (100) and the adjacent stator segment (120) are arranged one after another along the circumferential direction (107) in such a manner that the spacer structure (110) of the stator segment (100) abuts with the adjacent spacer structure of the adjacent stator segment (120).
wherein the end coil comprises a smaller circumferential thickness than the circumferential extension of the accommodation space (104).

14. Method of manufacturing a stator segment (100) of a stator of a generator for a wind turbine, the method comprising
providing a base body (101) extending between a first axial end (105) and a second axial end in axial direction (106) and in circumferential direction (107) of the generator,
wherein the base body (101) comprises a circumferential end face (102) extending between the first axial end (105) and the second axial end,
forming an end tooth structure (103) extending in radial direction (108) from the base body (101) and extending between the first axial end (105) and the second axial end, wherein the end tooth structure (103) is spaced apart from the end face (102) along the circumferential direction (107) for forming an accommodation space (104) for accommodating an end coil (109) of the stator, and
forming a spacer structure (110) which is configured for being coupled to a circumferentially arranged adjacent stator segment (120) for spacing the accommodation space (104) from an adjacent accommodation space (124) of the adjacent stator segment (120).
